# EUROPÄISCHE PATENTSCHRIFT

(11) **EP 2 663 378 B1**
(45) Veröffentlichungstag und Bekanntmachung des Hinweises auf die Patenterteilung: **17.07.2019**
(21) Anmeldenummer: 11791212.1
(22) Anmeldetag: 19.11.2011
(51) Int. Cl.: B01D 36/00, B01D 29/58

(54) **FILTERVORRICHTUNG**
FILTER DEVICE
DISPOSITIF DE FILTRATION

(30) Priorität: 15.01.2011 DE 102011008671
(43) Veröffentlichungstag der Anmeldung: 20.11.2013
(73) Patentinhaber: Hydac Filtertechnik GmbH, 66280 Sulzbach/Saar (DE)
(72) Erfinder: EBERLE, Richard, 66399 Ormesheim (DE); KREIBIG, Micha, 66780 Rehlingen-Siersburg (DE); SCHOLL, Thomas, 66740 Saarlouis (DE); DEWES, Markus, 66649 Oberthal (DE); BRALL, Sven, 66111 Saarbrücken (DE)
(74) Vertreter: Bartels und Partner, Patentanwälte
(86) Internationale Anmeldenummer: PCT/EP2011/005850
(87) Internationale Veröffentlichungsnummer: WO 2012/095124

(56) Entgegenhaltungen:
- EP-A1- 1 932 574
- EP-A2- 0 260 069
- DE-A1-102005 015 194
- DE-B- 1 125 192
- FR-A1- 2 851 790
- JP-U- 60 018 261
- US-A- 1 328 044

## Beschreibung

Die Erfindung betrifft eine Filtervorrichtung, insbesondere für mit Wasserbeimengungen belastete Fluide wie Dieselöl, mit den Merkmalen im Oberbegriff von Anspruch 1.

Filtervorrichtungen der oben genannten Art sind Stand der Technik. Sie werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Wasseranteile zu schützen. Die Abscheidung von im Kraftstoff mitgeführten Wassseranteilen kann hierbei durch einen Koagulationsprozess bewirkt werden, bei dem an dem Filtermedium Wassertröpfchen gebildet werden, die aus einem am Filterelement gebildeten Abscheideraum zur Wassersammeleinrichtung abfließen können.

EP 0 260 069 A2 offenbart eine Filtervorrichtung, insbesondere für mit Wasserbeimengungen belastete Fluide wie Dieselöl, mit einem Filtergehäuse, in dem mindestens ein zylindrisches Filterelement aufgenommen ist, dessen Filtermedium beim Filtriervorgang im Filtergehäuse eine Rohseite von einer Reinseite trennt, wobei eine Wassersammeleinrichtung vorhanden ist, die auf der Reinseite abgeschiedenes Wasser aufnimmt, wobei auf der Rohseite abgeschiedenes Wasser gleichfalls in die Wassersammeleinrichtung gelangt, wobei in der Wassersammeleinrichtung zwei fluiddicht voneinander getrennte Wassersammelräume vorhanden sind für das auf der Rein- und das auf der Rohseite jeweils abfließende Wasser, wobei das Filtergehäuse ein Hauptteil und ein sich an dessen Unterseite anschließendes Bodenteil aufweist, wobei das Bodenteil die Wassersammeleinrichtung bildet, wobei das Hauptteil eine Seitenwand aufweist, wobei das Filterelement beim Filtriervorgang von der der Seitenwand des Filtergehäuses benachbarten äußeren Rohseite her zum inneren, die Reinseite bildenden Filterhohlraum hin durchströmbar ist, aus dem das reinseitig abgeschiedene Wasser in den ersten Wassersammelraum der Wassersammeleinrichtung abfließt, wobei eine Trenneinrichtung vorgesehen ist, die ein Trennelement zwischen erstem und zweitem Wassersammelraum der Wassersammeleinrichtung bildet, wobei die Trenneinrichtung einen auf die Achse des Filterhohlraumes des Filterelements ausgerichteten zentralen Durchlass für das Abfließen des reinseitig abgeschiedenen Wassers in den in der Wassersammeleinrichtung zentral gelegenen ersten Wassersammelraum sowie zumindest einen zum Durchlass radial versetzten Durchgang für den Abfluss des rohseitig abgeschiedenen Wassers zum zweiten Wassersammelraum aufweist, der den ersten Wassersammelraum umgibt und wobei das der Wassersammeleinrichtung zugewandte untere Ende des Filtermediums oder des bodenseitigen Abschlussbereiches des Filterelementes von einer Endkappe eingefasst ist, die an einer Elementaufnahme des Filtergehäuses festlegbar ist, die den zentralen Durchlass für aus der Reinseite abfließendes Wasser aufweist und zusammen mit einem zwischen dem zentralen Durchlass und der Seitenwand des Hauptteils verlaufenden Wandteil die Trenneinrichtung bildet.

Weitere Filtervorrichtungen gehen aus der EP 1 932 574 B1, der JP S60-18261 und der US 1 328 044 hervor. Durch die DE 1 125 192 wird ein Gerät zur volumetrischen Prüfung von Flüssigkeitsmessgeräten aufgezeigt.

Ausgehend von diesem Stand der Technik stellt sich die Erfindung die Aufgabe, eine Filtervorrichtung zu schaffen, die sich durch eine verbesserte Abdichtung auszeichnet.

Diese Aufgabe löst erfindungsgemäß eine Filtervorrichtung, die die Merkmale des Patentanspruches 1 in seiner Gesamtheit aufweist.

Gemäß dem kennzeichnenden Teil des Anspruchs 1 besteht eine wesentliche Besonderheit der Erfindung darin, dass in dem Wandteil die Durchgänge für den Abfluss des Wassers aus der Rohseite ausgebildet sind und dass die Elementaufnahme einen nach oben vorspringenden Aufnahmestutzen aufweist, der einen Sitz für einen zentralen Rohrstutzen bildet, der von der unteren Endkappe des Filterelementes vorspringt und im Aufnahmestutzen durch Dichtringe abgedichtet aufgenommen ist.

Erfindungsgemäß wird nicht nur die Koaleszenzwirkung genutzt, durch die beim Durchdringen des Filtermediums an der Reinseite des Systems eine Tröpfchenbildung bewirkt wird, sondern es wird zusätzlich auf der Rohseite abgeschiedenes Wasser in den zugeordneten Wassersammelraum der Wassersammeleinrichtung geleitet. Die rohseitige Wasserabscheidung beruht hauptsächlich darauf, dass relativ große Wassertropfen durch Gravitationswirkung ausgeschieden werden, jedoch kann eine zusätzliche Tröpfchenbildung auch an der Rohseite des Filtermediums durch Koaleszenz erfolgen, insbesondere wenn das Filtermedium an seiner Rohseite mit einer koalisierenden Beschichtung versehen ist. Aufgrund der rohseitigen Abscheidung ist ein Durchdringen des Filtermediums durch die gesamte Wasserlast des Kraftstoffes somit nicht erforderlich, sondern lediglich kleine und kleinste Wassertropfen passieren das Filtermedium, erfahren eine Koaleszenz und werden in den reinseitigen Wassersammelraum abgeschieden, der vom rohseitigen Wassersammelraum gesondert ist. In vorteilhafter Weise kann daher die erfindungsgemäße Filtervorrichtung mit Kraftstoff, der mit Wasser stärker beladen ist, betrieben werden, ohne dass die Wirkung beeinträchtigt wird, beispielsweise durch eine Übersättigung des Filtermediums.

Erfindungsgemäß sind die beiden Wassersammelräume fluiddicht voneinander getrennt.

Bei besonders bevorzugten Ausführungsbeispielen ist eine Trenneinrichtung vorgesehen, die ein Trennelement sowohl zwischen dem unteren Ende des das Filterelement aufnehmenden Hauptteils des Gehäuses als auch zwischen erstem und zweitem Wassersammelraum der Wassersammeleinrichtung bildet.

Für die Verbindung zwischen der Rohseite und dem zugeordneten Wassersammelraum kann zwischen der Innenwand des Gehäuses und dem bodenseitigen Abschlussbereich des Filterelementes mindestens eine Spaltöffnung, vorzugsweise in Form eines umlaufenden Ringspaltes, vorgesehen sein, über den das Wasser von der Rohseite in den zuordenbaren Sammelbehälter abfließt.

Mit besonderem Vorteil kann die Anordnung so getroffen sein, dass die Elementaufnahme für die Aufnahme eines zentralen Rohrstutzens der Endkappe, der den Filterhohlraum fortsetzt, einen zentralen Aufnahmestutzen aufweist, dessen unterer Endrand, der der Wassersammeleinrichtung zugewandt ist, die durch ein schalenförmiges Bodenteil des Gehäuses gebildet ist, mit dem oberen Endrand des ersten Wassersammelraumes in abgedichteter Verbindung ist, der durch einen im Bodenteil zentral angeordneten, bodenseitig geschlossenen Hohlzylinder gebildet ist.

Bei bevorzugten Ausführungsbeispielen grenzt das die Durchgänge für aus der Rohseite abfließendes Wasser aufweisende Wandteil der Elementaufnahme an einen nach unten vorstehenden Ringkörper des Gehäuses an, der die Verbindung zwischen dem Hauptteil des Gehäuses und den Bodenteil bildet, dessen Seitenwand über ein Dichtelement mit dem Ringkörper verbunden ist und zusammen mit diesem den zweiten, rohseitigen Wassersammelraum verschließt, der den innenliegenden ersten Wassersammelraum umgibt.

Vorzugsweise ist an jedem Wassersammelraum eine Ablassschraube bodenseitig angeordnet, und mit besonderem Vorteil kann die Anordnung so getroffen sein, dass das Bodenteil mindestens ein das visuelle Erkennen zumindest des Füllstandes des äußeren, zweiten Wassersammelraumes ermöglichendes Wandteil aufweist. In vorteilhafter Weise kann das Bodenteil beispielsweise aus einem Kunststoffmaterial ausreichender Durchsichtigkeit einstückig geformt sein.

Um in Fällen, in denen das Wasservolumen des reinseitigen, inneren Wassersammelraumes zum großen Teil vom rohseitig abgeschiedenen Wasservolumen umgeben ist, eine Sichtmöglichkeit zu schaffen, die es dem Bediener ermöglicht, rein- und rohseitig abgeschiedene Wasservolumina möglichst frei von darüber befindlichem Dieselöl abzulassen, kann die Anordnung mit Vorteil so getroffen sein, dass die Ablassschraube des inneren, ersten Wassersammelraumes an einem Sichtrohr angeordnet ist, das sich zur Bildung einer visuell nutzbaren Beobachtungsstrecke vom Boden des ersten Wassersammelraumes nach unten erstreckt.

Nachstehend ist die Erfindung anhand eines in der Zeichnung dargestellten Ausführungsbeispiels im Einzelnen erläutert.

Es zeigen:
- Fig. 1: einen Längsschnitt einer mit einer Wasser-Abscheideeinrichtung versehenen Kraftstofffiltervorrichtung gemäß dem Stand der Technik;
- Fig.2: einen leicht schematisch vereinfacht gezeichneten Längsschnitt eines Ausführungsbeispiels der erfindungsgemäßen Filtervorrichtung und

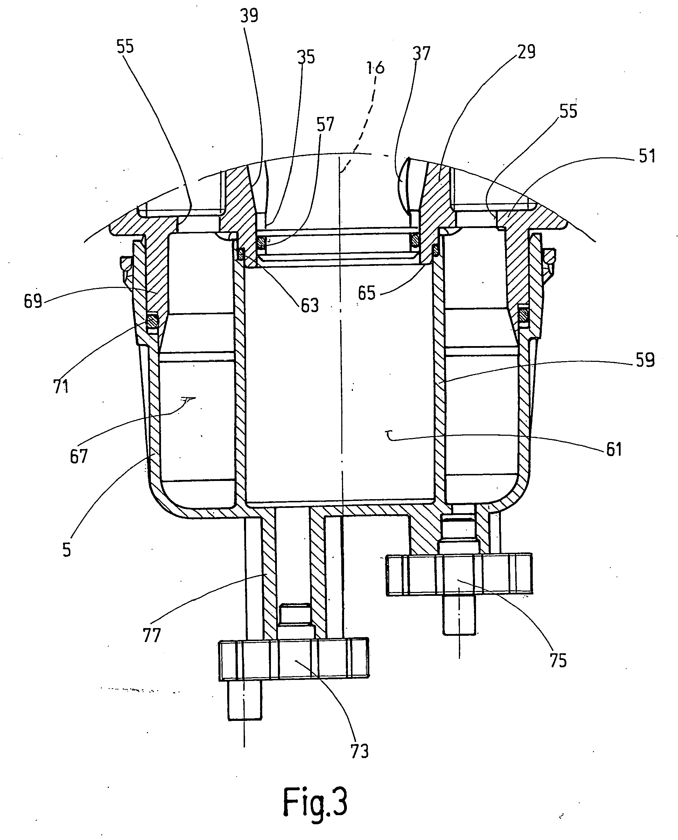

- Fig.3: einen gegenüber Fig.2 vergrößert gezeichneten Teil-Längsschnitt des in Fig.2 mit III bezeichneten Bezirks.

Nachstehend ist die Erfindung am Beispiel eines Kraftstofffilters erläutert, der in einem (nicht gezeigten) Kraftstoffversorgungssystem eines Verbrennungsmotors zur Reinigung von Dieselöl vorgesehen ist, das mit gewissen Wasserbeimengungen verunreinigt ist. Die Erfindung eignet sich gleichermaßen für andersartige Fluide.

Die Vorrichtung weist ein Filtergehäuse 1 mit einem hohlzylinderförmigen Hauptteil 3 und einem sich an dessen Unterseite anschließenden Bodenteil auf. Am oberen Ende ist mit dem Hauptteil 3 ein Gehäusedeckel 7 verschraubt, der für Einbau und Ausbau eines Filterelements 9 abnehmbar ist. Zwischen der Außenseite des durch eine Filtermatte gebildeten Filtermediums 11 des im Gehäuse 1 aufgenommenen Filterelements 9 und der Innenwand des Gehäuses 1 befindet sich ein Zwischenraum, der beim Filtrationsvorgang die Rohseite 13 bildet. Der zu reinigende Kraftstoff ist über eine Einlauföffnung 15 zur Rohseite 13 zuführbar und durchströmt das Filterelement 9 von außen nach innen zu einem inneren Filterhohlraum 17 hin, der beim Filtrationsvorgang die Reinseite 19 bildet.

In der bei Filterelementen üblichen Weise sind an den Enden Endkappen 21 und 23 vorgesehen, die Einfassungen für das Filtermedium 11 und ein an dessen Innenseite anliegendes, fluiddurchlässiges Stützrohr 25 bilden. In einem radialen Abstand vom Stützrohr 25 befindet sich ein den inneren Filterhohlraum 17 rohrförmig umgebendes hydrophobes Sieb 26. Um eine Wasserabscheidung zu bewirken, wird bei derartigen Kraftstofffiltern ein Filtermedium 11 benutzt, das für das von Kraftstoff mitgeführte Wasser koagulierend wirkt, so dass Wasser in Tröpfchenform ausfällt, das in dem Zwischenraum zwischen Stützrohr 25 und hydrophobem Sieb 26 verbleibt und absinkt, da das Sieb 26 für koagulierte Wassertropfen undurchlässig ist. Der Zwischenraum bildet daher einen Wasser-Abscheideraum 27, in den das abgeschiedene Wasser zur Endkappe 23 absinkt.

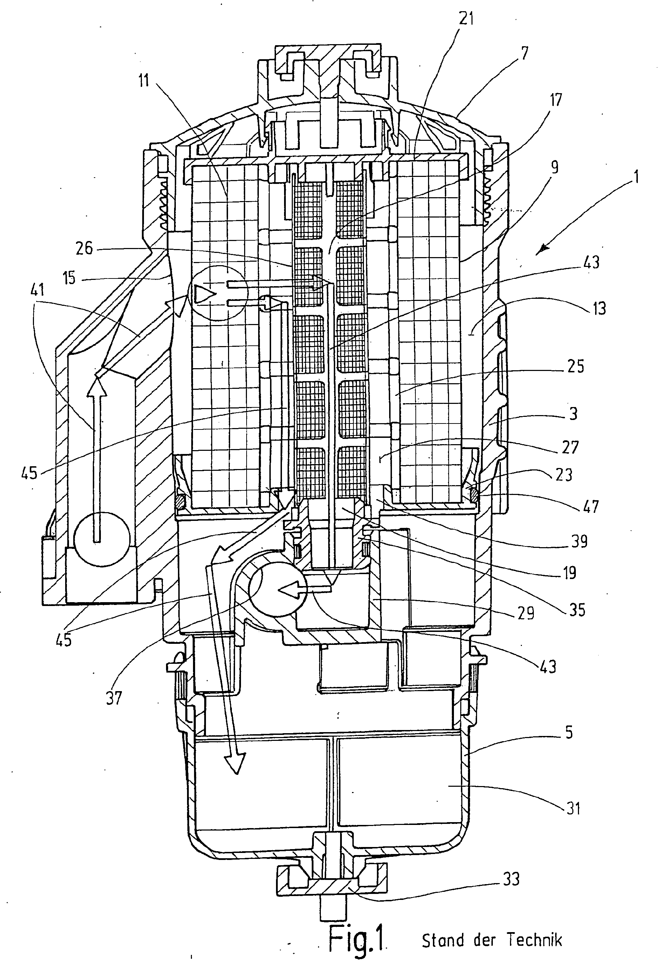

Mit dieser unteren Endkappe 23 ist das Filterelement 9 an einer gehäusefesten Elementaufnahme 29 festgelegt, die sich oberhalb des Bodenteils befindet, das einen Wassersammelraum 31 bildet, aus dem abgesondertes Wasser über einen Wasserablass 33 abführbar ist. Für die Zusammenwirkung mit der Elementaufnahme 29 weist die Endkappe 23 bei der dem Stand der Technik entsprechenden Vorrichtung einen zentralen Rohrstutzen 35 als Durchlass für den aus der Reinseite 19, d.h. dem inneren Filterhohlraum 17, austretenden, abgereinigten Kraftstoff auf, der zu einem in der Elementaufnahme 29 befindlichen Kraftstoffaustritt 37 und von dort zur Außenseite des Gehäuses 1 gelangt. Für den Abfluss des im Abscheideraum 27 befindlichen, abgeschiedenen Wassers ist in der Endkappe 23 ein den Rohrstutzen 35 umgebender, zum Abscheideraum 27 offener Wasserdurchlass 39 gebildet, über den das abgeschiedene Wasser unmittelbar entlang der Außenseite der Elementaufnahme 29 zum Wassersammelraum 31 gelangt. Die entsprechenden Strömungsverhältnisse sind in Fig.1 mit Strömungspfeilen verdeutlicht, von denen die Pfeile 41 den Kraftstoffzustrom zur Rohseite 13, die Pfeile 43 die Strömung des gereinigten Dieselöls und die Pfeile 45 die Wasserströmung verdeutlichen. Zur Abdichtung der an der Außenseite des Filterelements 9 befindlichen Rohseite 13 gegenüber dem bodenseitigen Wassersammelraum 31 befindet sich am Außenumfang der Endkappe 23 eine Dichtungsanordnung in Form eines gegen die Innenseite des Filtergehäuses abdichtenden Dichtringes 47. Die Endkappe 23 bildet so eine Trenneinrichtung, die den Hauptteil 3 des Gehäuses 1 vom darunterliegenden Bodenteil trennt, das den Wassersammelraum 31 bildet.

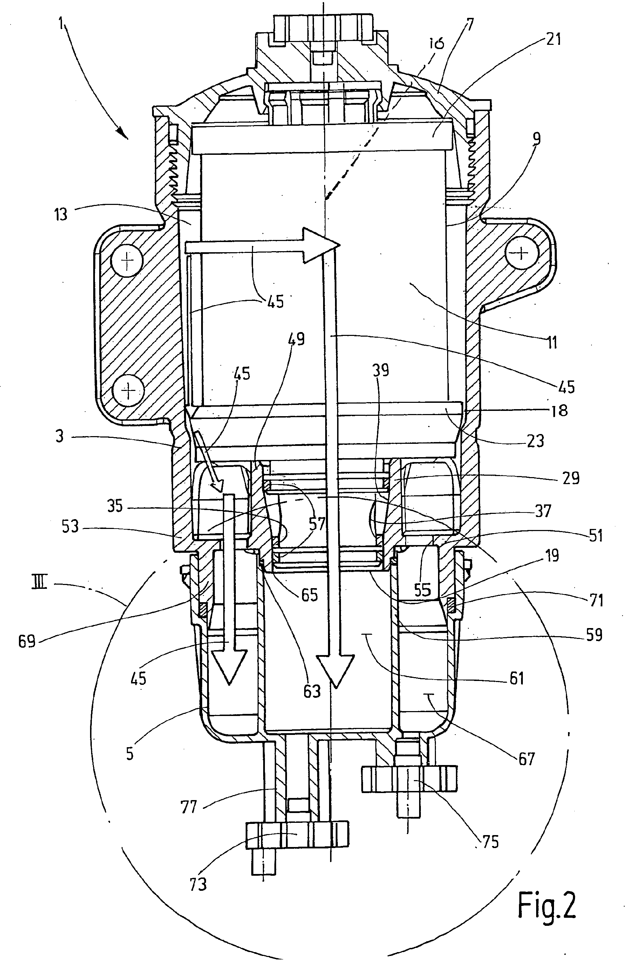

In Fig.2, die das hier zu beschreibende Ausführungsbeispiel der erfindungsgemäßen Filtervorrichtung zeigt, ist die Einlauföffnung (15 in Fig.1) für den Kraftstoffeintritt zur Rohseite 13 des Gehäuses 1 nicht dargestellt. Auch ist der innere Aufbau des Filterelementes 9 nicht gezeigt, da er dem in Fig.1 gezeigten Stand der Technik entsprechen kann. Wie bei Fig.1 ist auch hier für den aus der Reinseite 19, d.h. dem inneren Filterhohlraum 17, austretenden, abgereinigten Kraftstoff ein in der Elementaufnahme 29 befindlicher Kraftstoffaustritt 37 vorhanden, der zur Außenseite des Gehäuses 1 führt.

Während beim Stand der Technik die Endkappe 23 des Filterelementes 9 an ihrem radial außen liegenden Rand mit einem an der Gehäusewand anliegenden Dichtelement 47 die Trenneinrichtung zwischen Gehäusehauptteil 3 und der darunterliegenden Sammeleinrichtung (Bodenteil) bildet, befindet sich beim Ausführungsbeispiel von Fig.2 zwischen dem Außenrand der Endkappe 23 und der Gehäusewand 53 ein Spalt 18, über den sich die Rohseite 13 nach unten in Richtung auf die Elementaufnahme 29 fortsetzt. In der Rohseite 13 abgeschiedenes Wasser fließt so, wie mit Pfeil 45 verdeutlicht, in Richtung auf das Bodenteil ab. Die Elementaufnahme 29 bildet mit ihrem nach oben vorspringenden Aufnahmestutzen 49 nicht nur den Sitz für den zentralen Rohrstutzen 35, der von der Endkappe 23 des Filterelementes 9 vorspringt und im Aufnahmestutzen 49 durch Dichtringe 57 abgedichtet aufgenommen ist, sondern bildet auch die Trenneinrichtung zwischen Rohseite 13 und Reinseite 19 und damit zwischen einem reinseitigen, ersten Sammelraum 61 und einem rohseitigen, zweiten Sammelraum 67 im Bodenteil. In diesem ist der erste Sammelraum 61 durch einen bodenseitig geschlossenen Hohlzylinder 59 gebildet, der am oberen Ende offen ist. Der Endrand dieser oberen Öffnung des ersten Sammelraumes 61 ist über einen Dichtring 63 mit dem unteren Endrand 65 des Aufnahmestutzens 49 der Elementaufnahme 29 in Verbindung. Dadurch ist der erste Wassersammelraum 61, der Bestandteil der Reinseite 19 des Systems ist, fluiddicht gegenüber dem ihn umgebenden Raum innerhalb des Bodenteils abgedichtet. Dieser Teil bildet den zweiten Wassersammelraum 67.

Als Bestandteil der Trenneinrichtung weist die Elementaufnahme 29 ein Wandteil 51 auf, das sich zwischen dem Aufnahmestutzen 49 und der Gehäusewand 53 erstreckt. Dieses Wandteil 51 weist Durchgänge 55 auf, die neben dem Hohlzylinder 59 des ersten Sammelraums 61 in den diesen umgebenden zweiten Sammelraum 67 münden und durch die das rohseitig abgeschiedene Wasser abfließt, so dass der zweite Sammelraum 67 insoweit Bestandteil der Rohseite 13 bildet. Für die Abdichtung des zweiten Sammelraumes 67 gegenüber der Seitenwand 53 des Gehäuses 1 übergreift das schalenförmig ausgebildete Bodenteil mit seinem oberen Randbereich einen Ringkörper 69, der sich von dem die Durchgänge 55 aufweisenden Wandteil 51 nach unten erstreckt, wobei für die Abdichtung des zweiten Sammelraumes 67 nach außen ein Dichtelement 71 zwischen Stufen am Ringkörper 69 und der Wand des Bodenteils eingesetzt ist.

Das Bodenteil kann aus einem Werkstoff einstückig geformt sein, der zumindest insoweit lichtdurchlässig ist, dass eine Beobachtung des Füllstandes visuell erkennbar ist. Während der außen liegende zweite Sammelraum 67 insoweit einsehbar ist, kann die Beobachtung des Füllstandes des innen liegenden ersten Sammelraums 61 erschwert oder gar nicht möglich sein, wenn der äußere Sammelraum 67 entsprechend weit gefüllt ist. Um dem abzuhelfen, sind die für beide Sammelräume 61 und 67 vorgesehenen, bodenseitigen Ablasseinrichtungen 73 bzw. 75 in unterschiedlichen Höhenstufen angeordnet, wobei, wie in der Zeichnung gezeigt, die Ablasseinrichtung 73 vom Boden des ersten Sammelraums 61 weg über ein Rohrstück 77 nach unten versetzt angeordnet ist. Für Ablassvorgänge bildet das Rohrstück 77 so ein Sichtrohr, das es ermöglicht, Wasser aus dem ersten Wassersammelraum 61 so weit abzulassen, dass praktisch kein Austritt des darüberliegenden Dieselöls erfolgt, weil der Ablassvorgang visuell beobachtbar ist. Entsprechendes gilt für Ablassvorgänge aus dem zweiten Sammelraum 67, dessen Füllstand ohne weiteres visuell beobachtbar ist.

## Patentansprüche

1. Filtervorrichtung, insbesondere für mit Wasserbeimengungen belastete Fluide wie Dieselöl, mit einem Filtergehäuse (1), in dem mindestens ein zylindrisches Filterelement (9) aufgenommen ist, dessen Filtermedium (11) beim Filtriervorgang im Filtergehäuse (1) eine Rohseite (13) von einer Reinseite (19) trennt, wobei eine Wassersammeleinrichtung (5) vorhanden ist, die auf der Reinseite abgeschiedenes Wasser aufnimmt, wobei auf der Rohseite (13) abgeschiedenes Wasser gleichfalls in die Wassersammeleinrichtung (5) gelangt, wobei in der Wassersammeleinrichtung (5) zwei fluiddicht voneinander getrennte Wassersammelräume (61, 67) vorhanden sind für das auf der Rein(19)- und das auf der Rohseite (13) jeweils abfließende Wasser, wobei das Filtergehäuse (1) ein Hauptteil (3) und ein sich an dessen Unterseite anschließendes Bodenteil aufweist, wobei das Bodenteil die Wassersammeleinrichtung (5) bildet und wobei das Hauptteil (3) eine Seitenwand (53) aufweist,
wobei das Filterelement (9) beim Filtriervorgang von der der Seitenwand (53) des Filtergehäuses (1) benachbarten äußeren Rohseite (13) her zum inneren, die Reinseite (19) bildenden Filterhohlraum (17) hin durchströmbar ist, aus dem das reinseitig abgeschiedene Wasser in den ersten Wassersammelraum (61) der Wassersammeleinrichtung (5) abfließt,
wobei eine Trenneinrichtung (29, 51) vorgesehen ist, die ein Trennelement zwischen erstem und zweitem Wassersammelraum (61, 67) der Wassersammeleinrichtung (5) bildet,
wobei die Trenneinrichtung (29, 51) einen auf die Achse (16) des Filterhohlraumes (17) des Filterelements (9) ausgerichteten zentralen Durchlass (39) für das Abfließen des reinseitig abgeschiedenen Wassers in den in der Wassersammeleinrichtung (5) zentral gelegenen ersten Wassersammelraum (61) sowie zumindest einen zum Durchlass (39) radial versetzten Durchgang (55) für den Abfluss des rohseitig abgeschiedenen Wassers zum zweiten Wassersammelraum (67) aufweist, der den ersten Wassersammelraum (61) umgibt,
und wobei das der Wassersammeleinrichtung (5) zugewandte untere Ende des Filtermediums (11) oder des bodenseitigen Abschlussbereiches des Filterelementes (9) von einer Endkappe (23) eingefasst ist, die an einer Elementaufnahme (29) des Filtergehäuses (1) festgelegt ist, die den zentralen Durchlass (39) für aus der Reinseite (19) abfließendes Wasser aufweist und zusammen mit einem zwischen dem zentralen Durchlass (39) und der Seitenwand (53) des Hauptteils (3) verlaufenden Wandteil (51), in dem die Durchgänge (55) für den Abfluss des Wassers aus der Rohseite (13) ausgebildet sind, die Trenneinrichtung (29, 51) bildet, **dadurch gekennzeichnet, dass** die Elementaufnahme (29) einen nach oben vorspringenden Aufnahmestutzen (49) aufweist, der einen Sitz für einen zentralen Rohrstutzen (35) bildet, der von der unteren Endkappe des Filterelementes (9) vorspringt und im Aufnahmestutzen (49) durch Dichtringe (57) abgedichtet aufgenommen ist.

2. Filtervorrichtung nach Anspruch 1, **dadurch gekennzeichnet, dass** überwiegend mittels einer Koalisiereinrichtung Wasser auf der Reinseite (19) und überwiegend mittels Gravitationswirkung Wasser auf der Rohseite (13) abgeschieden ist

3. Filtervorrichtung nach einem der vorhergehenden Ansprüche, **dadurch gekennzeichnet, dass** zwischen der Innenwand des Hauptteils (3) und dem bodenseitigen Abschlussbereich des Filterelementes (9) mindestens eine Spaltöffnung, vorzugsweise in Form eines umlaufenden Ringspaltes (18), vorgesehen ist, über den das Wasser von der Rohseite (13) in den zugeordnet zweiten Wassersammelraum (67) fließt.

4. Filtervorrichtung nach einem der vorstehenden Ansprüche, **dadurch gekennzeichnet, dass** der Aufnahmestutzen einen unteren Endrand (65) aufweist, der der Wassersammeleinrichtung zugewandt ist, die durch ein schalenförmiges Bodenteil des Gehäuses (1) gebildet ist, mit dem oberen Endrand des ersten Wassersammelraumes (61) in abgedichteter Verbindung ist, der durch einen im Bodenteil zentral angeordneten, bodenseitig geschlossenen Hohlzylinder (59) gebildet ist.

5. Filtervorrichtung nach einem der vorstehenden Ansprüche, **dadurch gekennzeichnet, dass** das die Durchgänge (55) für aus der Rohseite (13) abfließendes Wasser aufweisende Wandteil (51) der Elementaufnahme (29) an einen nach unten vorstehenden Ringkörper (69) des Gehäuses (1) angrenzt, der die Verbindung zwischen dem Hauptteil (3) des Gehäuses (1) und dem Bodenteil bildet, dessen Seitenwand über ein Dichtelement (71) mit dem Ringkörper (69) verbunden ist und zusammen mit diesem den zweiten Wassersammelraum (67) verschließt, der den innen liegenden ersten Wassersammelraum (61) umgibt.

6. Filtervorrichtung nach einem der vorstehenden Ansprüche, **dadurch gekennzeichnet, dass** an jedem Wassersammelraum (61, 67) eine Ablassschraube (73, 75) bodenseitig angeordnet ist.

7. Filtervorrichtung nach einem der vorstehenden Ansprüche, **dadurch gekennzeichnet, dass** das Bodenteil mindestens ein das visuelle Erkennen zumindest des Füllstandes des äußeren, zweiten Wassersammelraumes (67) ermöglichendes Wandteil aufweist.

8. Filtervorrichtung nach Anspruch 6, **dadurch gekennzeichnet, dass** die Ablassschraube (73) des inneren, ersten Wassersammelraumes (61) an einem Sichtrohr (77) angeordnet ist, das sich zur Bildung einer visuell nutzbaren Beobachtungsstrecke vom Boden des ersten Wassersammelraumes (61) nach unten erstreckt.

9. Filtervorrichtung nach Anspruch 8, **dadurch gekennzeichnet, dass** das Bodenteil, einschließlich des Sichtrohres (77), aus einem zumindest eingeschränkt lichtdurchlässigen Werkstoff gebildet ist.

10. Filtervorrichtung nach einem der vorstehenden Ansprüche, **dadurch gekennzeichnet, dass** die Wassersammeleinrichtung (5) mit ihren einzelnen Wassersammelräumen (61, 67) einstückig ausgebildet ist.

## Claims

1. Filter device, in particular for fluids contaminated with water, such as diesel oil, with a filter housing (1), in which at least one cylindrical filter element (9) is accommodated, whose filter medium (11) separates an unfiltered side (13) from a filtered side (19) in the filter housing (1) during the filtration procedure, wherein a water collection device (5) is available, which receives water separated on the filtered side, wherein water separated on the unfiltered side (13) likewise passes into the water collection device (5), wherein two fluid-tight water collection chambers (61, 67), separate from one another, are available in the water collection device (5) respectively for the water draining from the filtered (19) and from the unfiltered (13) sides, wherein the filter housing (1) has a main member (3) and a linked base member on its underside, wherein the base member forms the water collection device (5) and wherein the main member (3) has a side wall (53), wherein flow can take place through the filter element (9) during the filtration process from the outer unfiltered side (13) adjacent to the side wall (53) of the filter housing (1) to the inner filter cavity (17) forming the filtered side (19), from which the water separated on the filtered side drains into the first water collection chamber (61) of the water collection device (5), wherein a separating device (29, 51) is provided, which forms a separating element between first and second water collection chambers (61, 67) of the water collection device (5),
wherein the separating device (29, 51) has a central passage (39) aligned with the axis (16) of the filter cavity (17) of the filter element (9) for the discharge of the water separated on filtered side into the centrally aligned first water collection chamber (61) in the water collection device (5) as well as at least one passageway (55) radially displaced from the passage (39) for the discharge of the water separated on the unfiltered side to the second water collection chamber (67), which surrounds the first water collection chamber (61),
and wherein the lower end of the filter medium (11) facing the water collection device (5) or of the discharge portion of the filter element (9) is enclosed by an end cap (23), which is attached to an element mounting (29) of the filter housing (1), which has a central passage (39) for the water discharging from the filtered side (19) and together with a part (51) of the wall running between the central passage (39) und the side wall (53) of the main member (3) in which the passageways (55) for the discharge of the water from the unfiltered side (13) are formed, constitutes the separation device (29, 51) **characterised in that** the element mounting (29) has a receiving socket (49) protruding upwards, which forms a location for a central pipe connection (35), which projects from the lower end cap of the filter element (9) and has a sealed connection in the receiving socket (49) through sealing rings (57).

2. Filter device in accordance with claim 1, **characterised in that** water is discharged on the filtered side (19) mainly by means of a coalescing device and on the unfiltered side (13) mainly due to the gravitational effect.

3. Filter device in accordance with one of the preceding claims, **characterised in that** at least one gap opening is provided between the inside wall of the main member (3) and the base-side end portion of the filter element (9), preferably in the form of a circumferential annular gap (18), through which the water from the unfiltered side (13) drains into the associated second water collection chamber (67).

4. Filter device in accordance with one of the preceding claims, **characterised in that** the receiving socket has a lower terminal edge (65), oriented towards the water collection device, which is formed by a shell-like base part of the housing (1), with the upper terminal edge of the first water collecting chamber (61) in sealed connection, which is formed by hollow cylinder (59) closed at the bottom, located centrally in the base member.

5. Filter device in accordance with one of the preceding claims, **characterised in that** the wall portion (51) pf the element mounting (29) having the passageways (55) for water draining from the unfiltered side (13) abut an annular body (69) of the housing (1) projecting downwards, which forms the connection between the main member (3) of the housing (1) and the base member, the side wall of which is attached to the annular body (69) by means of a sealing element (71) and together with this closes the second water collection chamber (67), which surrounds the inner first water collection chamber (61).

6. Filter device in accordance with one of the preceding claims, **characterised in that** a drainage plug (73, 75) is provided on the base of each water collection chamber (61, 67).

7. Filter device in accordance with one of the preceding claims, **characterised in that** the base member comprises at least a wall portion enabling the visual recognition of at least the filling level of the outer, second water collection chamber (67).

8. Filter device in accordance with claim 6, **characterised in that** the drainage plug (73) of the inner, first water collection chamber (61) is arranged on a sight tube (77), which extends downwards to form a visually usable observation length from the base of the first water collection chamber (61).

9. Filter device in accordance with claim 8, **characterised in that** the base, including the sight tube (77), is formed from a material that is at least partially transparent.

10. Filter device in accordance with one of the preceding claims, **characterised in that** the water collection device (5) with its individual water collection chambers (61, 67) is formed in one piece.

## Revendications

1. Dispositif de filtration, notamment de fluides chargés d'addition d'eau, comme du carburant diesel, comprenant une enveloppe (1) de filtre, dans laquelle est reçu au moins un élément (9) de filtre cylindrique, dont le milieu (11) filtrant sépare, lors de la filtration dans l'enveloppe (1) du filtre, un côté (13) brut d'un côté (19) propre, dans lequel il y a un dispositif (5) de collecte d'eau, qui reçoit de l'eau séparée du côté propre, dans lequel de l'eau séparée du côté (13) brut parvient également au dispositif (5) de collecte d'eau, dans lequel il y a, dans le dispositif (5) de collecte d'eau, deux espaces (61, 67) de collecte d'eau séparés l'un de l'autre d'une manière étanche au fluide pour l'eau s'écoulant du côté (19) propre et respectivement du côté (13) brut, l'enveloppe (1) du filtre ayant une partie (13) principale et une partie de fond se raccordant à son côté inférieur, la partie de fond formant le dispositif (5) de collecte d'eau et la partie (3) principale ayant une paroi (53) latérale, l'élément (9) du filtre pouvant, à la filtration, être traversé du côté (13) brut extérieur, voisin de la paroi (53) latérale de l'enveloppe (1) du filtre, à la cavité (17) du filtre intérieure formant le côté (19) propre, de laquelle l'eau séparée du côté propre s'écoule dans le premier espace (61) de collecte d'eau du dispositif (5) de collecte d'eau, dans lequel il est prévu un dispositif (29, 51) de séparation, qui forme un élément de séparation entre le premier et le deuxième espace (61, 67) de collecte d'eau du dispositif (5) de collecte d'eau,
dans lequel le dispositif (29, 51) de séparation a un passage (39) central, dirigé suivant l'axe (16) de la cavité (17) de l'élément (9) du filtre, pour l'évacuation de l'eau séparée du côté propre dans le premier espace (61) de collecte d'eau disposé centralement dans le dispositif (5) de collecte d'eau, ainsi qu'au moins un passage (55), décalé radialement par rapport au passage (39), pour l'évacuation de l'eau séparée du côté brut vers le deuxième espace (67) de collecte d'eau, qui entoure le premier espace (61) de collecte d'eau,
et dans lequel l'extrémité inférieure, tournée vers le dispositif (5) de collecte d'eau, du milieu (11) filtrant ou de la partie de fermeture du côté du fond de l'élément (9) du filtre est enchâssée d'une coiffe (23) d'extrémité, fixée à un logement (29) d'élément de l'enveloppe (1) du filtre, lequel a le passage (9) central pour de l'eau s'écoulant du côté (19) propre et forme ensemble avec une partie (51) de pavois s'étendant entre le passage (39) central et la paroi (53) latérale de la partie (3) principale, partie (51) dans laquelle sont constitués les passages (56) pour l'évacuation de l'eau du côté (13) brut, le dispositif (29, 51) de séparation,
**caractérisé en ce que**
le logement (29) d'élément a une tubulure (49) faisant saillie vers le haut, qui forme un siège pour une tubulure (35) centrale, qui fait saillie de la coiffe d'extrémité inférieure de l'élément (9) du filtre et qui est reçue avec étanchéité par des bagues (57) d'étanchéité dans la tubulure (49) du logement.

2. Dispositif de filtration suivant la revendication 1, **caractérisé en ce que** l'eau du côté (19) propre est séparée d'une manière prépondérante au moyen d'un dispositif de coalescence et de l'eau du côté (13) brut d'une manière prépondérante au moyen d'un effet de gravitation.

3. Dispositif de filtration suivant l'une des revendications précédentes, **caractérisé en ce qu'**il est prévu entre la paroi intérieure de la partie (3) principale et la partie de fermeture, du côté du fond de l'élément (9) du filtre, au moins une ouverture en fente, de préférence sous la forme d'un intervalle (18) annulaire faisant le tour, par lequel l'eau s'écoule du côté (13) brut au deuxième espace (67) de collecte d'eau associée.

4. Dispositif de filtration suivant l'une des revendications précédentes, **caractérisé en ce que** la tubulure du logement a un bord (65) d'extrémité inférieure, qui est tourné vers le dispositif de collecte d'eau, lequel est formé d'une partie de fond en forme de coque de l'enveloppe (1), avec laquelle le bord d'extrémité supérieure du premier espace (61) de collecte d'eau est en liaison de manière étanche, ce dernier étant formé d'un cylindre (59) creux fermé du côté du fond et disposé de manière centrale dans la partie de fond.

5. Dispositif de filtration suivant l'une des revendications précédentes, **caractérisé en ce que** la partie (51) de paroi, ayant les passages (55) pour de l'eau s'écoulant du côté (13) brut, du logement (29) d'élément est voisine d'une pièce (69) annulaire en saillie, vers le bas, de l'enveloppe (1), pièce qui forme la liaison entre la partie (3) principale de l'enveloppe (1) et la partie de fond, dont la paroi latérale est reliée à la pièce (69) annulaire par un élément (71) d'étanchéité et ferme ensemble avec celui-ci le deuxième espace (67) collecteur d'eau, qui entoure le premier espace (61) collecteur d'eau se trouvant à l'intérieur.

6. Dispositif de filtration suivant l'une des revendications précédentes, **caractérisé en ce qu'**une vis (73, 75) d'évacuation est prévue du côté du fond sur chaque espace (61, 67) de collecte d'eau.

7. Dispositif de filtration suivant l'une des revendications précédentes, **caractérisé en ce que** la partie de fond a au moins une partie de paroi permettant de reconnaître visuellement au moins le niveau du deuxième espace (67) extérieur de collecte d'eau.

8. Dispositif de filtration suivant la revendication 6, **caractérisé en ce que** la vis (73) d'évacuation du premier espace (61) intérieur de collecte d'eau est disposée sur un tube (77) d'inspection visuelle, qui pour former une section d'observation utile visuellement, s'étend vers le bas depuis le fond du premier espace (61) de collecte d'eau.

9. Dispositif de filtration suivant la revendication 8, **caractérisé en ce que** la partie de fond, y compris le tube (77) d'inspection visuelle, est en un matériau transparent au moins de manière limitée.

10. Dispositif de filtration suivant l'une des revendications précédentes, **caractérisé en ce que** le dispositif (5) de collecte d'eau est constitué d'une seule pièce avec ses espaces (61, 67) individuels de collecte d'eau.
